# EUROPEAN PATENT SPECIFICATION

(11) **EP 3 492 772 B1**
(45) Date of publication and mention of the grant of the patent: **09.02.2022**
(21) Application number: 17020551.2
(22) Date of filing: 29.11.2017
(51) Int. Cl.: F16F 15/00, B60W 30/20, G05B 17/02, G05B 13/04

(54) **METHOD FOR VIBRATION ATTENUATION IN AN AUTOMOTIVE DRIVETRAIN, CORRESPONDING DATA PROCESSING APPARATUS, COMPUTER PROGRAM, AND DATA CARRIER SIGNAL**
VERFAHREN ZUR SCHWINGUNGSDÄMPFUNG IN EINEM FAHRZEUGANTRIEBSSTRANG, ENTSPRECHENDE DATENVERARBEITUNGSVORRICHTUNG, COMPUTERPROGRAMM UND DATENTRÄGERSIGNAL
PROCÉDÉ D'ATTÉNUATION DES VIBRATIONS DANS UNE CHAÎNE CINÉMATIQUE D'AUTOMOBILE, APPAREIL DE TRAITEMENT DE DONNÉES CORRESPONDANT, PROGRAMME INFORMATIQUE ET SIGNAL DE SUPPORT DE DONNÉES

(43) Date of publication of application: 05.06.2019
(73) Proprietor: Dr. Ing. h.c. F. Porsche AG, 70435 Stuttgart (DE)
(72) Inventor: Hrazdira, Adam, 12800 Prag (CZ); Hanis, Thomas, 257 23 Prestavlky u Cercan (CZ); Kasparkova, Tereza, E., 55203 Ceska Skalice (CZ)

(56) References cited:
- WO-A1-2017/134577
- US-A1- 2015 347 670
- US-B2- 9 740 180

## Description

The present invention pertains to a method for attenuation of vibration in a drivetrain. The invention further relates to a corresponding data processing apparatus, computer program, and data carrier signal.

### State of the art

The automotive industry is predominantly driven by legislations on stringent emissions.

This has led to the introduction of downsized engines, incorporating turbocharging to maintain output power. As downsized engines have higher combustion pressures, the resulting torsional oscillations (engine order vibrations) are of broadband nature with an increasing severity, which in turn affects noise and vibration response of the drivetrain system. Palliative devices such as clutch pre-dampers and dual mass flywheel have been used to mitigate the effect of transmitted engine torsional oscillations.

For instance, DE102004039756A1 and US2012091934A each disclose a drivetrain vibration damping system incorporating a linear time-invariant system to achieve attenuation. GB2468630A, US2006025905A, and US2013325285A each pertain to a drivetrain vibration damping system using an iterative adjustment procedure for attenuating the vibrations.

In the context of industrial-level applications, use of a modified proportional-integral-derivative controllers (PID+) is widespread in frequency domain filtration-based control system architectures. However, pertinent systems rely on signal-based tuning with no possibility of a-priori defined uncertainty.

Document WO2017134577, which is considered as the closest prior art, discloses a method for attenuation of vibration in a drivetrain for an automobile according to the preamble of claim 1.

### Disclosure of invention

The invention provides a method for attenuation of vibration in a drivetrain, a corresponding data processing apparatus, computer program, and data carrier signal as per the independent claims.

Embodiments of the present invention are motivated by the demand for reliable control structures which are already known in the automotive industry. Furthermore, the invention strives to meet the challenges posed by complexity, constrained or limited computation power, robustness requirements for a-priori well-known system uncertainty, multi-objective or multivariable performance criteria, and problem definition in the frequency domain.

To this end, a robust control system design based on optimization techniques with predefined control structure is proposed. Low complexity of the designed control system is ensured by several means: First, the control system structure and thus the overall order of the control system is prescribed a priori. Second, the burdensome main computational effort is made once and offline. Third, exploiting the predefined robustness property of the proposed solution leads to a reduction of the linear time-invariant (LTI) controller needed for possible gain-scheduling.

To fulfill the robustness requirements of the control system (the control system needs to be, by design, robust with respect to a-priori well-known system uncertainties and variation of the system operation point), the proposed methodology shares the inherent robust property of the designed control system as per a multi-objective and multi-variable performance definition. It should be further noted that the proposed methodology uses multi-objective performance definition as a standard.

Advantageously, the objectives expressed as a criterion may be formulated directly in the frequency domain. Non-physical and non-measurable signals can further be used in the criterion. As elucidated hereinbefore, robustness requirements are defined a priori and thus form an inherent property of the design. Consequently, tne LTI control system is designed offline for a selected uncertainty region. Its extension to a multiple-input multiple-output (MIMO) control system architecture is a natural process.

For this purpose, the complexity of one specific LTI control system is predefined as the structure is a-priori defined. Based on robustness properties of this control system, the number of LTI control systems necessary for gain scheduling is deduced, and therefore the complexity of corresponding gain scheduling apparatus is limited. The overall on-board computational power demand is limited due to the above-mentioned properties of the proposed approach.

### Brief description of drawing

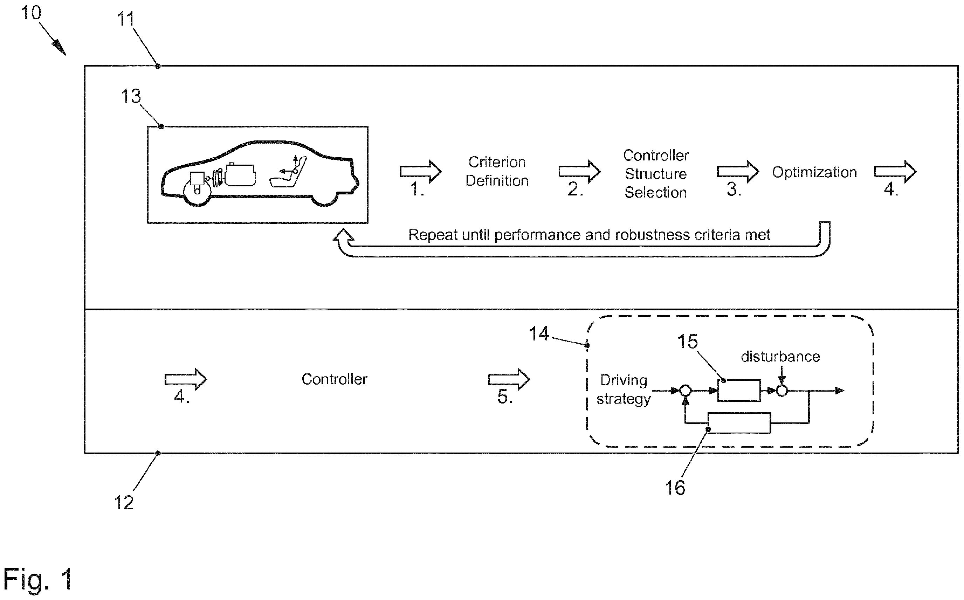

The features of the invention believed to be novel are set forth with particularity in the appended claims. The invention itself, however, may be best understood by reference to the following detailed description of the invention, which describes an exemplary embodiment of the invention, taken in conjunction with the accompanying drawing. This sole figure shows an overview of a system as per the invention.

### Detailed description of the invention

The figure illustrates an exemplary method (10) for attenuation of vibration in a drivetrain (15) for an automobile. An initial controller design phase (11) encompasses the steps of analyzing a model (13) of the drivetrain (15), defining criteria for the vibration, selecting a structure of a controller (16) for the attenuation, and optimizing the structure of the controller (16). These steps of analyzing, defining, selecting, and optimizing are repeated as necessary until the controller (16) meets the defined criteria, which may particularly relate to its robustness and performance.

Hence, in the ensuing application phase (12), only one dynamic controller (16) needs to be applied in a feedback control system (14) of the drivetrain (15). This LTI control system (14) takes as reference input a desired driving strategy of the automobile and is arranged in such a fashion as to try to regulate the drivetrain (15), considering random disturbance that may alter its vibration.

## Claims

1. Method (10) for attenuation of vibration in a drivetrain (15) for an automobile, comprising the steps of
- analyzing a model (13) of the drivetrain (15),
- defining criteria for the vibration,
- selecting a structure of a controller (16) for the attenuation,
- optimizing the structure of the controller (16), and **characterised, in**
- repeating the analyzing, defining, selecting, and optimizing until the controller (16) meets the defined criteria.

2. Method (10) as per claim 1,
**characterized in that** the criteria comprise at least
- a performance criterion and
- a robustness criterion.

3. Method (10) as per claim 2,
**characterized in that**
- the controller (16) is dynamic.

4. Method (10) as per claim 2 or 3,
**characterized in that**
- the controller (16) is applied in a feedback control system (14) of the drivetrain (15).

5. Method (10) as per claim 4,
**characterized in that**
- the control system (14) takes as input a desired driving strategy for the automobile.

6. Method (10) as per claim 4 or 5,
**characterized in that**
- the control system (14) is linear and time-invariant.

7. Data processing apparatus comprising means for carrying out a method (10) as per any of claims 1 through 6.

8. Computer program comprising instructions which, when the program is executed by a computer, cause the computer to carry out a method (10) as per any of claims 1 through 6.

9. Data carrier signal carrying the program as per claim 8.

## Patentansprüche

1. Verfahren (10) zur Dämpfung von Schwingung in einem Antriebsstrang (15) für ein Kraftfahrzeug, umfassend die folgenden Schritte
- Analysieren eines Modells (13) des Antriebsstrangs (15),
- Definieren von Kriterien für die Schwingung,
- Wählen einer Struktur eines Controllers (16) für die Dämpfung,
- Optimieren der Struktur des Controllers (16), und **gekennzeichnet durch**
- Wiederholen des Analysierens, Definierens, Wählens und Optimierens, bis der Controller (16) die definierten Kriterien erfüllt.

2. Verfahren (10) nach Anspruch 1,
**dadurch gekennzeichnet, dass** die Kriterien mindestens umfassen
- ein Leistungskriterium und
- ein Robustheitskriterium.

3. Verfahren (10) nach Anspruch 2,
**dadurch gekennzeichnet, dass**
- der Controller (16) dynamisch ist.

4. Verfahren (10) nach Anspruch 2 oder 3,
**dadurch gekennzeichnet, dass**
- der Controller (16) in einem Rückkopplungssteuersystem (14) des Antriebsstrangs (15) angewendet wird.

5. Verfahren (10) nach Anspruch 4,
**dadurch gekennzeichnet, dass**
- das Steuersystem (14) als eine Eingabe eine Sollfahrstrategie für das Kraftfahrzeug nimmt.

6. Verfahren (10) nach Anspruch 4 oder 5,
**dadurch gekennzeichnet, dass**
- das Steuersystem (14) linear und zeitinvariant ist.

7. Datenverarbeitungsvorrichtung umfassend Mittel zum Ausführen eines Verfahrens (10) nach einem der Ansprüche 1 bis 6.

8. Computerprogramm umfassend Anweisungen, die, wenn das Programm durch einen Computer ausgeführt wird, bewirken, dass der Computer ein Verfahren (10) nach einem der Ansprüche 1 bis 6 ausführt.

9. Datenträgersignal, das das Programm nach Anspruch 8 trägt.

## Revendications

1. Procédé (10) d'atténuation des vibrations dans une chaîne cinématique (15) d'une automobile, le procédé comprenant les étapes suivantes :
- analyser un modèle (13) de la chaîne cinématique (15),
- définir des critères pour les vibrations,
- sélectionner une structure d'un contrôleur (16) pour l'atténuation,
- optimiser la structure du contrôleur (16),
et **caractérisé par** :
- la répétition de l'analyse, de la définition, de la sélection et de l'optimisation jusqu'à ce que le contrôleur (16) satisfasse les critères définis.

2. Procédé (10) selon la revendication 1,
**caractérisé en ce que** les critères comprennent au moins :
- un critère de performance, et
- un critère de robustesse.

3. Procédé (10) selon la revendication 2,
**caractérisé en ce que** :
- le contrôleur (16) est dynamique.

4. Procédé (10) selon la revendication 2 ou la revendication 3,
**caractérisé en ce que** :
- le contrôleur (16) est appliqué dans un système de commande à rétroaction (14) de la chaîne cinématique (15) .

5. Procédé (10) selon la revendication 4,
**caractérisé en ce que** :
- le système de commande (14) prend en entrée une stratégie de conduite souhaitée pour l'automobile.

6. Procédé (10) selon la revendication 4 ou la revendication 5,
**caractérisé en ce que** :
- le système de commande (14) est linéaire et invariant dans le temps.

7. Appareil de traitement de données comprenant des moyens pour exécuter un procédé (10) selon l'une quelconque des revendications 1 à 6.

8. Programme informatique comprenant des instructions qui, lorsque le programme est exécuté par un ordinateur, amènent l'ordinateur à exécuter un procédé (10) selon l'une quelconque des revendications 1 à 6.

9. Signal porteur de données portant le programme selon la revendication 8.
